# EUROPEAN PATENT APPLICATION

(11) **EP 1 990 736 A1**
(43) Date of publication of application: **12.11.2008**
(21) Application number: 07710893.4
(22) Date of filing: 09.02.2007
(51) Int. Cl.: G06F 17/20

(54) **A PROCESSING METHOD AND SYSTEM OF CUSTOM OBJECT BASED ON OBJECT STORAGE LIBRARY**

(30) Priority: 13.02.2006 CN 200610007388
(71) Applicant: Wuxi Evermore Software, Inc, Wuxi City, Jiangsu Province 214028 (CN)
(72) Inventor: LENG, Ye, Wuxi, Jiangsu 214028 (CN); HUANG, Fang, Wuxi, Jiangsu 214028 (CN)
(74) Representative: Price, Nigel John King
(86) International application number: PCT/CN2007/000466
(87) International publication number: WO 2007/093119

(57) **Abstract**

A method and a system for processing a user-defined object based on an object storage. The method includes the following steps: a generic object template is newly built (10); corresponding information of the user-defined object is written into a name attribute, an application program attribute, a display attribute and a data field of the generic object template (20); the above information of the generic object template is stored as a generic object in a format which can be identified by an application program (30); the generic object is stored into the object storage (40); and the application program loads the generic object (50). The system includes a module for newly building a generic object template, a module for writing corresponding information of the user-defined object into a name attribute, an application program attribute, a display attribute and a data field of the generic object template, a module for storing the above information of the generic object template as a generic object in a format which can be identified by an application program, a module for storing the generic object into the object storage and a module for loading the generic object by the application program.

## Description

### FIELD OF THE TECHNOLOGY

The present invention relates to a method and a system for processing objects by an object storage, and particularly to a method and a system for processing a user-defined object based on an object storage.

### BACKGROUND OF THE INVENTION

In the prior art, all the development based on the office software are performed by invoking and developing macros. Along with the increasing of the users' requirements and the individualized development, there are plenty of problems in performing a secondary development of the function extension on the office software by invoking and developing the macros. For example, this form of software development just rests on the upper application category, so the function that can be extended is limited. Sometimes, the confusion of the data structure also appears which results in the development failure. Meanwhile, this development can only quote standard objects defined by the office software. The user cannot set a new object, and cannot combine and integrate the objects yet, which more restricts the user's development.

The object storage (Data Object Oriented Repository System, DOORS) is a bottom dada structure of the *Evermore's* office software. It provides an object access mode in the form of a two-dimensional table. The two-dimensional table specifies a cell uniquely by a table number, a row number and a column number. Each cell can accommodate an object and can only accommodate one. The objects of the cells can be combined into a new object by quoting. All the cells make up of the object storage. The upper application interacts with the object storage through an object storage engine. There are standard interfaces for accessing the objects in the object storage through the object storage engine. The interfaces are opened and the user can visit and operate the objects in the object storage if only the user knows the interfaces.

The objects used currently are standard objects, such as Document, Paragraph, Slide, Text and so on, which are defined based on the office software application and are stored in the subject storage. The advantage of defining the standard objects is that an object becomes the only form of expressing the data once the object expressing a certain kind of data has been defined. This action of standardizing the objects can ensure the sententiousness of data expression of all the office software. Furthermore, most of object definitions can be used repeatedly, which reduces the data redundancy and enhances greatly the operation performance of the office software. For example, any places expressing the text, such as the text in the word processing, the text in the excel cell and the text in the slide, use the Paragraph object. In this way, the Paragraph object becomes the standard object expressing the paragraph text. Not only the object can be used by the office software itself, but also the user can use the defined object directly if the user performs the development based on the object storage.

In the face of the more and broader application and popularity of the office software application, the content and number of the prior standard objects already cannot satisfy the users' requirement, especially cannot satisfy the requirement for performing the secondary development of the function extension based on the object storage. Therefore, it is provided with important practical significance that the object storage can process the unknown object of the office software.

### SUMMARY OF THE INVENTION

The object of the present invention is to provide a method and a system for processing a user-defined object based on an object storage, which aims at the deficiencies of the prior art, allows the user to define the unknown object of the office software, and makes the user can perform the secondary development of the function extension based on the object storage through the open platform provided by the object storage.

In order to accomplish the above object, the present invention provides a method for processing a user-defined object based on an object storage. When the application program loads the user-defined object, the object storage engine executes the following operations:

step 10, a generic object template is newly built;

step 20, corresponding information of said user-defined object is written into a name attribute, an application program attribute, a display attribute and a data field of the generic object template;

step 30, the above information of the generic object template is stored as a generic object in a format which can be identified by the application program;

step 40, said generic object is stored into the object storage; and

step 50, the application program loads said generic object.

Said step 20 concretely includes the following steps:

step 21, a name of said user-defined object is written into the name attribute of the generic object template;

step 22, a name of the application program for processing said user-defined object is written into the application program attribute of the generic object template;

step 23, the display attribute of the generic object template is set as no displaying, displaying in picture or displaying in text; and

step 24, a data content of said user-defined object is imported into the data field of the generic object template.

The above technical solution further includes a step of performing the display processing by the application program. The step concretely includes the following steps:

step 61, a value of a displaying/no displaying attribute is judged; if the value is true, execute step 62; if the value is false, execute step 67;

step 62, a value of a picture display attribute is judged; if the value is true, execute step 63; if the value is false, execute step 64;

step 63, a width attribute, a height attribute and a picture data identification are read and execute step 65;

step 64, a text data identification is read and execute step 66;

step 65, the application program displays the picture data identification in the form of the picture and the processing ends;

step 66, the application program displays the text data identification in the form of the text and the processing ends; and

step 67, the application program displays nothing and the processing ends.

The above technical solution further includes a step of modifying the data content of the generic object by the application program. The step concretely includes the following steps:

step 71, the application program attribute of the generic object is read;

step 72, the appointed application program is invoked in accordance with said application program attribute;

step 73, the generic object is edited by using said application program; and

step 74, the data field of the generic object is updated, and return to the application program.

In order to accomplish the above object, the present invention also provides a system for processing a user-defined object based on an object storage. It includes the following modules:

a module is used for newly building a generic object template;

a module is used for writing corresponding information of said user-defined object into a name attribute, an application program attribute, a display attribute and a data field of the generic object template;

a module is used for storing the above information of the generic object template as a generic object in a format which can be identified by an application program;

a module is used for storing said generic object into the object storage; and

a module is used for loading said generic object by the application program.

The present invention provides the method and the system for processing the user-defined object based on the object storage. Through performing a packing processing on the user-defined object, the user-defined object becomes a generic object according with the definition regulation of the object storage, and can be identified and operated by the office software. The user can define a new object according to the requirements based on the technical solution of the present invention, and use the user-defined object to perform the secondary development of the function extension on the office software. The user-defined object may be data, of which the particle size is quite small, and also may be large as an application. The user-defined object may be an object generated by other application program and also may be an object defined by the user himself. The common character is that it's an unknown and unidentified object to the office software. The present invention transforms said user-defined object into the generic object, so as to make the user-defined object be known, identified and applied by the office software. The application program can perform the accessing and operating on said user-defined object through the object storage engine, and the application program may be invoked to process the object in accordance with the application program attribute of the user-defined object, so as to perform the secondary development of each of the functions on the office software.

The present invention will be described in more details with reference to the drawings and embodiments.

### BRIEF DESCRIPTION OF THE DRAWINGS

Fig.1 is a flowchart of a method for processing a user-defined object based on an object storage according to the present invention;

Fig.2 is a flowchart of setting each of the attributes of the generic object template according to the present invention;

Fig.3 is a flowchart of setting the display attribute according to the present invention;

Fig.4 is a flowchart of performing the display processing by the application program according to the present invention; and

Fig.5 is a flowchart of modifying the data content of the generic object by the application program according to the present invention.

### DETAILED DESCRIPTION OF THE PREFERRED EMBODIMENTS

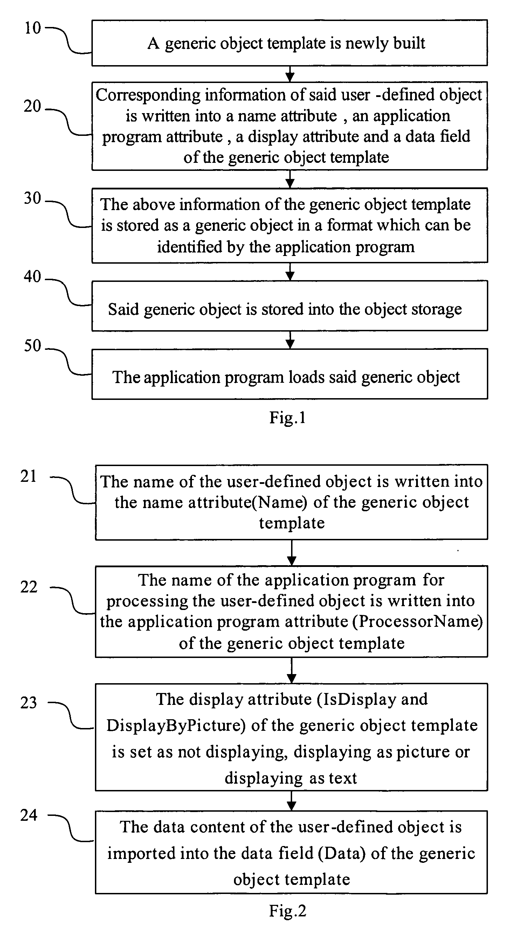

Fig.1 is a flowchart of a method for processing a user-defined object based on an object storage according to the present invention. It concretely includes the following steps:

step 10, a generic object template is newly built;

step 20, corresponding information of said user-defined object is written into a name attribute, an application program attribute, a display attribute and a data field of the generic object template;

step 30, the above information of the generic object template is stored as a generic object in a format which can be identified by the application program;

step 40, said generic object is stored into the object storage; and

step 50, the application program loads said generic object.

The generic object template in the step 10 is a template which is designed according with the object storage definition regulation and has the generic object attribute. In the object storage, a part of the attributes related to the content of the present invention are defined as follows.

(A) Name attribute (Name)

Its type is a character string type, and it represents a name of the object;

(B) Application program attribute (ProcessorName)

Its type is a character string type, and it represents a processing program which processes the object, and also represents which application program the object is generated by;

(C) Displaying/no displaying attribute (IsDisplay)

Its type is a Boolean value, and it represents whether the object can be displayed in the office software. If the value is true, the object can be displayed; if the value is false, the object cannot be displayed;

(D) Picture display attribute (DisplayByPicture)

Its type is a Boolean value, and it represents whether the display mode is in the form of the picture or in the form of the text. If the value is true, it displays in the form of the picture; if the value is false, it displays in the form of the text;

(E) Text data identification (Text)

Its type is a character string type, and it represents text data required when the object is displayed in the form of the text in the office software. The text data exists when the picture display attribute (DispalyByPicture) is false, otherwise it doesn't exist;

(F) Picture data identification (PictrueData)

Its type is a byte array type, and it represents picture data required when the object is displayed in the form of the picture in the office software. The picture data exists when the picture display attribute (DisplayByPicture) is true, otherwise it doesn't exist;

(G) Width attribute (Weidth)

Its type is a floating point numbers type, it is the width occupied by the picture object. It exists when the displaying/no displaying attribute (IsDisplay) is true; otherwise such data doesn't exist;

(H) Height attribute (Height)

Its type is a floating point numbers type, it is the height occupied by the picture object. It exists when the displaying/no displaying attribute (IsDisplay) is true; otherwise such data doesn't exist;

(I) Data field (Data)

Its type is a byte array type, and it is the real data of the object.

As can be seen from the above illumination, the step 20 is to evaluate the attribute values of the user-defined object to the name attribute (Name), the application program attribute (ProcessorName), the displaying/no displaying attribute (IsDisplay) of the generic object template in turn, which brings the user-defined object into accord with the criterion of the generic object formally, and makes the application program of the office software identify the user-defined object through its criterion attribute and perform kinds of processing like processing the generic object. Fig.2 is a flowchart of setting each of the attributes of the generic object template according to the present invention. It concretely includes the following steps:

step 21, the name of the user-defined object is written into the name attribute (Name) of the generic object template;

step 22, the name of the application program for processing the user-defined object is written into the application program attribute (ProcessorName) of the generic object template;

step 23, the display attribute (IsDisplay and DisplayByPicture) of the generic object template is set as no displaying, displaying in picture or displaying in text;

step 24, the data content of the user-defined object is imported into the data field (Data) of the generic object template.

In the above technical solution of the present invention, display attributes of the generic object template includes the displaying/no displaying attribute (IsDisplay) and the picture display attribute (DisplayByPicture). The value of the displaying/no displaying attribute (IsDisplay) is true and false which correspond to displaying the object and no displaying the object respectively. When the value of the displaying/no displaying attribute (IsDisplay) is true, the display attributes further includes that the value of the picture display attribute (DisplayByPicture) is true and false which correspond to displaying in picture and displaying in text respectively. It concretely is:

A. When the object is set as no displaying, the displaying/no displaying attribute (IsDisplay) is evaluated as false;

B. When the object is set as displaying, the displaying/no displaying attribute (IsDisplay) is evaluated as true, and the display mode of the object is further set:

B1. When the object is set to be displayed in the form of the picture, the picture display attribute (DisplayByPicture) is evaluated as true;

B2. When the object is set to be displayed in the form of the text, the picture display attribute (DisplayByPicture) is evaluated as false.

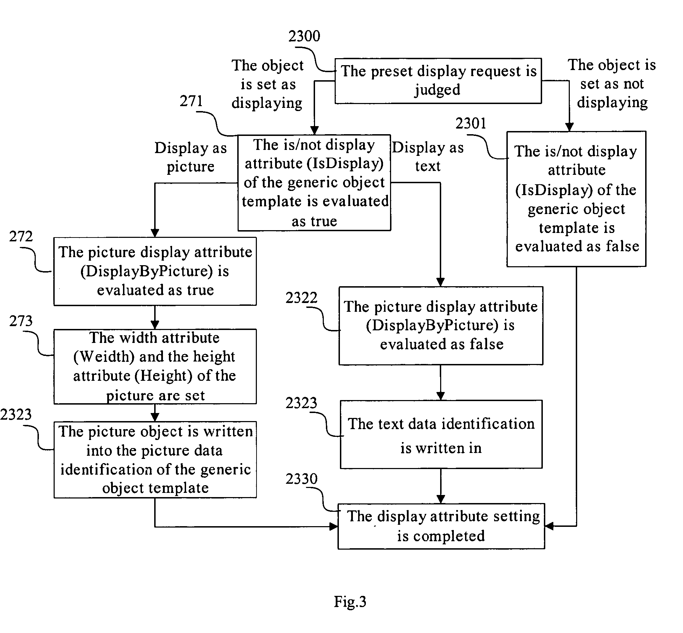

Fig.3 is a flowchart of setting the display attribute according to the present invention. It concretely includes the following steps:

step 2300, a preset display request is judged. Execute step 2301 when the object is set as no displaying, and execute step 2311d when the object is set as displaying;

step 2301, the displaying/no displaying attribute (IsDisplay) of the generic object template is evaluated as false, and execute step 2330;

step 2311, the displaying/no displaying attribute (IsDisplay) of the generic object template is evaluated as true; execute step 2312 when the object is set to be displayed in the form of the picture, and execute step 2322 when the object is set to be displayed in the form of the text;

step 2312, the picture display attribute (DisplayByPicture) of the generic object template is evaluated as true;

step 2313, the width attribute (Weidth) and the height attribute (Height) of the picture are set;

step 2314, a picture object is generated and said picture object is written into the picture data identification (PictureData) of the generic object template and execute step 2330;

step 2322, the picture display attribute (DisplayByPicture) of the generic object template is evaluated as false;

step 2323, the text data identification (Text) is written in and execute step 2330; and

step 2330, the display attribute setting is completed.

Through the above steps, the procedure of encapsulating the user-defined object as the generic object is completed in the present invention. As can be seen from the above procedures, just the expression form of the attribute of the user-defined object is modified to be accorded with the definition regulation of the generic object in the object storage while its content and data are all stored integrally. To be more visual, the user-defined object is "packed" into a generic object, so any functions of the user-defined object are not changed. The step 30 is that the application program, according to the data definition format of the generic object, reads and processes the user-defined object stored in the object storage.

In the above technical solution of the present invention, the user-defined object encapsulated as the generic object is stored in the object storage through the step 40. The object storage engine can perform accessing and operating on the generic object through the opened standard interfaces. Therefore, the present invention can not only include the step that the application program performs the display processing, but also include the step that the application program modifies the data content of the generic object.

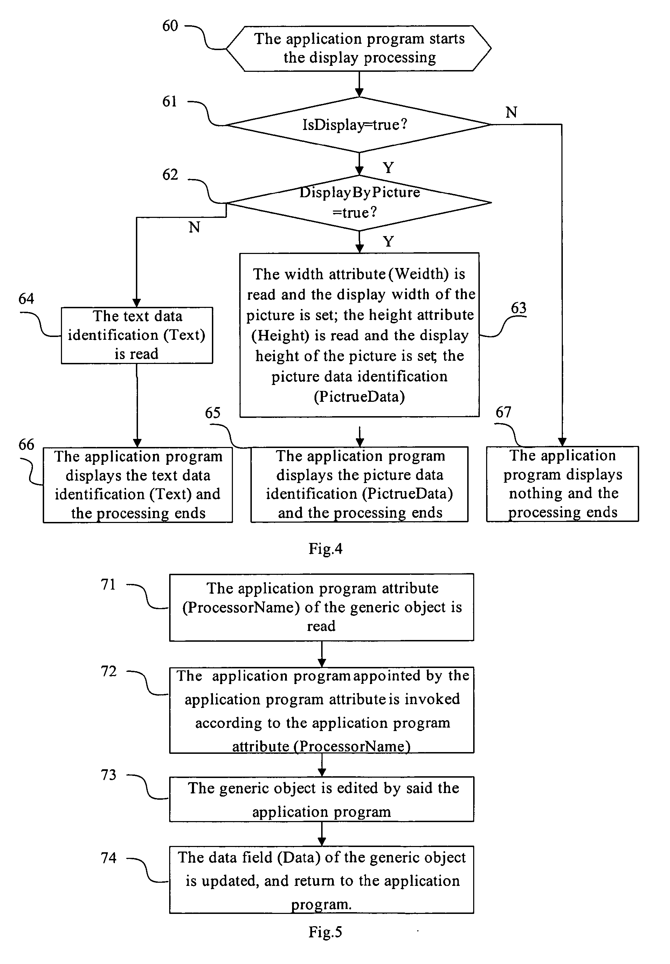

Fig.4 is a flowchart of the display processing by the application program according to the present invention. The application program of the office software performs the processing such as displaying or not, displaying in picture or displaying in text format etc. through reading the corresponding attribute value of the generic object. It concretely includes the following steps:

step 60, the application program starts the display processing;

step 61, the value of the displaying/no displaying attribute (IsDisplay) is judged whether it is true; if yes, execute step 62; otherwise execute step 67;

step 62, the value of the picture display attribute (DisplayByPicture) is judged whether it is true; if yes, execute step 63; otherwise execute step 64;

step 63, the width attribute (Weidth) is read and the display width of the picture is set; the height attribute (Height) is read and the display height of the picture is set; the picture data identification (PictrueData) is read and execute step 65;

step 64, the text data identification (Text) is read and execute step 66;

step 65, the application program displays the picture data identification (PictrueData) and the processing ends;

step 66, the application program displays the text data identification (Text) and the processing ends; and

step 67, the application program displays nothing and the processing ends.

Fig.5 is a flowchart of modifying the data content by the application program according to the present invention. After the user-defined object is displayed in the office software, the application program of the office software can access and operate the generic object through the object storage engine according to the requirement of the user, and can invoke the application program to process the object according to the application program attribute (ProcessorName) information of the user-defined object. It concretely includes the following steps:

step 71, the application program attribute (ProcessorName) of the generic object is read;

step 72, the application program appointed by the application program attribute is invoked according to the application program attribute (ProcessorName);

step 73, the generic object is edited by using said application program; and

step 74, the data field (Data) of the generic object is updated, and return to the application program.

As follows, the technical solution of the present invention is further illuminated through a concrete example that a plot object generated by the *autoCAD* is embedded into the office word processing document. Because the *autoCAD* plot object is not the standard object of the object storage and can not be identified and processed by the office wording processing program, the object storage firstly packs the *autoCAD* plot object as a generic object and then performs the displaying and other processing when the *autoCAD* plot object is put into the object storage. Supposing the *autoCAD* plot object is named as *CADObject* object and is displayed in the form of the picture, the step of packing the *autoCAD* plot object as the generic object concretely includes the following steps

(1) A generic object template is newly built;

(2) *CADObject* is written into the name attribute (Name) of the generic object template;

(3) *Autocad.exe* is written into the application program attribute (ProcessorName) of the generic object template and the location of *autocad.exe* is appointed at;

(4) The displaying/no displaying attribute (IsDisplay) of the generic object template is evaluated as true;

(5) The picture display attribute (DisplayByPicture) of the generic object template is evaluated as true;

(6) The width attribute (Weidth) is set as one value;

(7) The height attribute (Height) is set as one value;

(8) The *CADObject* is translated into a picture object, such as *jpg,* and said picture object is endued to the picture data identification (PictrueData);

(9) The practical data of the *CADObject* is imported into the data field (Data);

(10) The above attributes are encapsulated as an *autoCAD* generic object.

The above steps complete the packing of the *autoCAD* generic object. If the *autoCAD* generic object is needed to be put into a certain paragraph in the word processing document, the object storage engine can be invoked to put the *autoCAD* generic object into a cell grid in the object storage, and the paragraph is located in the cell grid. The word processing program is informed to process the *autoCAD* generic object. The word processing program, according to the content of the picture data identification (PictrueData) of the *autoCAD* generic object, reads the value of the width attribute (Weidth) and the value of the height attribute (Height) of the *autoCAD* generic object, and displays the *autoCAD* generic object in the location of said paragraph. The packed *autoCAD* generic object has no difference with other objects in the object storage. The user can operate the object, for example adding frame to the object, or moving the object to other location, or copying and pasting the object to many and so on according to the function of the word processing. If the user wants to change the content of the *autoCAD* generic object, the user can invoke the *autoCAD* to perform the editing through the application program attribute (ProcessorName) of the *autoCAD* generic object. After the editing is completed, the data field (Data) is updated and then return to the wording processing document.

A system for processing a user-defined object based on an object storage includes the following modules:

a module is used for newly building a generic object template;

a module is used for writing corresponding information of said user-defined object into a name attribute, an application program attribute, a display attribute and a data field of the generic object template;

a module is used for storing the above information of the generic object template as a generic object in a format which can be identified by an application program;

a module is used for storing said generic object into the object storage; and

a module is used for loading said generic object by the application program.

Said module for writing the corresponding information of said user-defined object into the name attribute, the application program attribute, the display attribute and the data field of the generic object template includes the following modules:

a module is used for writing the name of said user-defined object into the name attribute of the generic object template;

a module is used for writing the name of the application program for processing said user-defined object into the application program attribute of the generic object template;

a module is used for setting the display attribute of the generic object template as no displaying, displaying in picture or displaying in text; and

a module is used for importing the data content of said user-defined object into the data field of the generic object template.

Said module for setting the display attribute of the generic object template as no displaying is a module for setting the value of the displaying/no displaying attribute of the generic object template as false.

Said module for setting the display attribute of the generic object template as displaying in picture includes the following modules:

a module is used for setting the value of the displaying/no displaying attribute of the generic object template as true;

a module is used for setting the value of the picture display attribute of the generic object template as true;

a module is used for setting the width attribute and the height attribute of the picture; and

a module is used for writing the picture into the picture data identification of the generic object template.

Said module for setting the display attribute of the generic object template as displaying in text includes the following modules:

a module is used for setting the value of the displaying/no displaying attribute of the generic object template as true;

a module is used for setting the value of the picture display attribute of the generic object template as false; and

a module is used for setting the text data identification of the text.

Based on the above technical solution, a module for performing the display processing by the application program is further included. The module includes the following modules:

a module is used for judging the value of the displaying/no displaying attribute;

a module is used for judging the value of the picture display attribute;

a module is used for reading the width attribute, the height attribute and the picture data identification;

a module is used for reading the text data identification;

a module is used for displaying the picture data identification by the application program;

a module is used for displaying the text data identification by the application program; and

a module is used for displaying nothing by the application program.

Based on the above technical solution, a module for modifying the data content of the generic object by the application program is further included. The module includes the following modules:

a module is used for reading the application program attribute of the generic object;

a module is used for invoking the application program appointed by the application program attribute according to said application program attribute;

a module is used for editing the generic object by using said the application program; and

a module is used for updating the data field of the generic object and returning to the application program.

The function and the effect of each of the modules in the system for processing the user-defined object based on the object storage in the present invention have been particularly introduced in the above method for processing the user-defined object based on the object storage. It is unnecessary to go into detail.

Finally, it should be understood that the above embodiments are only used to explain, but not to limit the technical solution of the present invention. In despite of the detailed description of the present invention with referring to above preferred embodiments, it should be understood that various modifications, changes or equivalent replacements can be made by those skilled in the art without departing from the scope of the present invention and covered in the claims of the present invention.

## Claims

1. A method for processing a user-defined object based on an object storage, wherein when an application program loads the user-defined object, an object storage engine executes the following operations:
step 10, newly building a generic object template;
step 20, writing corresponding information of said user-defined object into a name attribute, an application program attribute, a display attribute and a data field of the generic object template;
step 30, storing the above information of the generic object template as a generic object in a format which can be identified by the application program;
step 40, storing said generic object into the object storage; and
step 50, loading said generic object by the application program.

2. The method according to claim 1, wherein said step 20 concretely comprises:
step 21, writing a name of said user-defined object into the name attribute of the generic object template;
step 22, writing a name of the application program for processing said user-defined object into the application program attribute of the generic object template;
step 23, setting the display attribute of the generic object template as no displaying, displaying in picture or displaying in text; and
step 24, importing a data content of said user-defined object into the data field of the generic object template.

3. The method according to claim 2, wherein the step of setting the display attribute of the generic object template as no displaying in said step 23 is to set a value of a displaying/no displaying attribute in the generic object template as false.

4. The method according to claim 2, wherein the step of setting the display attribute of the generic object template as displaying in picture in said step 23 comprises:
step 2311, setting a value of a displaying/no displaying attribute in the generic object template as true;
step 2312, setting a value of a picture display attribute in the generic object template as true;
step 2313, setting a width attribute and a height attribute of the picture; and
step 2314, writing the picture into a picture data identification of the generic object template.

5. The method according to claim 2, wherein the step of setting the display attribute of the generic object template as displaying in text in said step 23 comprises:
step 2321, setting a value of a displaying/no displaying attribute in the generic object template as true;
step 2322, setting a value of a picture display attribute in the generic object template as false; and
step 2323, setting a text data identification of the text.

6. The method according to any one of claims 1-5, further comprising a step of performing a display processing by the application program, wherein the step of performing the display processing by the application program concretely comprises:
step 61, judging the value of the displaying/no displaying attribute; if the value is true, executing step 62; if the value is false, executing step 67;
step 62, judging the value of the picture display attribute; if the value is true, executing step 63; if the value is false, executing step 64;
step 63, reading the width attribute, the height attribute and the picture data identification, and executing step 65;
step 64, reading the text data identification and executing step 66;
step 65, displaying the picture data identification by the application program and ending the processing;
step 66, displaying the text data identification by the application program and ending the processing; and
step 67, displaying nothing by the application program and ending the processing.

7. The method according to any one of claims 1-5, further comprising a step of modifying a data content of the generic object by the application program, wherein the step of modifying the data content of the generic object by the application program concretely comprises:
step 71, reading the application program attribute of the generic object;
step 72, invoking the application program appointed by the application program attribute in accordance with said application program attribute;
step 73, editing the generic object by using said application program; and
step 74, updating the data field of the generic object and returning to the application program.

8. A system for processing a user-defined object based on an object storage, comprising:
a module for newly building a generic object template;
a module for writing corresponding information of said user-defined object into a name attribute, an application program attribute, a display attribute and a data field of the generic object template;
a module for storing the above information of the generic object template as a generic object in a format which can be identified by an application program;
a module for storing said generic object into the object storage; and
a module for loading said generic object by the application program.

9. The system according to claim 8, wherein said module for writing corresponding information of said user-defined object into a name attribute, an application program attribute, a display attribute and a data field of the generic object template concretely comprises:
a module for writing a name of said user-defined object into the name attribute of the generic object template;
a module for writing a name of the application program for processing said user-defined object into the application program attribute of the generic object template;
a module for setting the display attribute of the generic object template as no displaying, displaying in picture or displaying in text; and
a module for importing a data content of said user-defined object into the data field of the generic object template.

10. The system according to claim 9, wherein said module for setting the display attribute of the generic object template as no displaying is a module for setting a value of a displaying/no displaying attribute in the generic object template as false.

11. The system according to claim 9, wherein said module for setting the display attribute of the generic object template as displaying in picture comprises:
a module for setting a value of a displaying/no displaying attribute in the generic object template as true;
a module for setting a value of a picture display attribute in the generic object template as true;
a module for setting a width attribute and a height attribute of the picture; and
a module for writing the picture into a picture data identification of the generic object template.

12. The system according to claim 9, wherein said module for setting the display attribute of the generic object template as displaying in text comprises:
a module for setting a value of a displaying/no displaying attribute in the generic object template as true;
a module for setting a value of a picture display attribute in the generic object template as false; and
a module for setting a text data identification of the text.

13. The system according to any one of claims 8-12, further comprising a module for performing a display processing by the application program, wherein the module for performing the display processing by the application program concretely comprises:
a module for judging the value of the displaying/no displaying attribute;
a module for judging the value of the picture display attribute;
a module for reading the width attribute, the height attribute and the picture data identification;
a module for reading the text data identification;
a module for displaying the picture data identification by the application program;
a module for displaying the text data identification by the application program; and
a module for displaying nothing by the application program.

14. The system according to any one of claims 8-12, further comprising a module for modifying a data content of the generic object by the application program, wherein the module for modifying the data content of the generic object by the application program concretely comprises:
a module for reading the application program attribute of the generic object;
a module for invoking the application program appointed by the application program attribute in accordance with said application program attribute;
a module for editing the generic object by using said application program; and
a module for updating the data field of the generic object and returning to the application program.
